# EUROPEAN PATENT APPLICATION

(11) **EP 4 817 483 A1**
(43) Date of publication of application: **07.10.2026**
(21) Application number: 26168866.7
(22) Date of filing: 30.03.2026
(51) Int. Cl.: A47J 47/02, B65D 21/02, B65D 43/02, B65D 47/08, B65D 51/16

(54) **SYSTEM FOR STORING CONSUMABLE PRODUCTS**

(30) Priority: 02.04.2025 US 202519098917
(71) Applicant: Caraway Home, Inc., New York, NY 10001 (US)
(72) Inventor: Nathan, Jordan, New York, NY (US); Palmieri, Sean, New York, NY (US); Armitage, Jordan, New York, NY (US); Recor, Bret, Princeville, HI (US); Isaacs, Dickon, Los Altos, CA (US); Andrejcic, Christoph, San Francisco, CA (US); Kay, Rebecca, San Francisco, CA (US); Gross, Benjamin, San Francisco, CA (US)
(74) Representative: Bandpay & Greuter

(57) **Abstract**

A storage system (100) comprising: one or more storage receptacles (102) including: a bottom wall, an opening, and at least one sidewall disposed about the bottom wall; one or more lids (104) reversibly couplable to the one or more storage receptacles, such that the one or more storage receptacles may be in at least one of an open configuration and a closed configuration, the one or more lids forming an airtight seal with the one or more storage receptacles while in the closed configuration; and one or more sealing switches (106) reversibly couplable to the one or more lids, the one or more sealing switches configurable into at least one of a sealed state and an unsealed state.

## Description

### FIELD OF THE PRESENT DISCLOSURE

The present disclosure is directed to a reversibly sealable consumable product storage receptacle. More specifically, the present disclosure is directed to reversibly sealable consumable product storage receptacles with a reduced storage footprint.

### INTRODUCTION

An often overlooked, but critical component of a kitchen's functionality, is efficient utilization of storage space. Modem day kitchens often include numerous containers used for both food storage and preparation. Today, many individuals sort non-perishables in such containers. Accordingly, kitchens include containers of various shapes and sizes, resulting in a need to store such containers.

Due to the constant use of culinary containers, the varied layouts of kitchens in different homes, and the need for accessible and convenient containers, a multitude of container storage systems have been attempted.

Traditional container storage systems attempt to store containers to reduce the footprint and space needed. This is particularly beneficial in scenarios where kitchen space is limited, such as apartments in urban settings. However, even with reduced footprints, traditional container storage systems are seldom efficient, as a result of manufacturing variations in shape and size. Essentially, there is great difficulty in organizing culinary containers, as said containers are oftentimes incongruent and fail to nest easily.

Not only are contemporary containers difficult to effectively store but also fail to store food effectively. One of the primary shortcomings of modern containers is their inability to create an airtight seal. Many plastic and glass containers rely on snap-on lids or screw-top designs that are not effective in preventing air infiltration. Oxygen exposure accelerates food spoilage by promoting oxidation, which degrades the texture, taste, and nutritional value of food. For instance, leafy greens stored in standard plastic containers often wilt within days due to excessive air circulation. Even vacuum-sealed containers, which claim to eliminate air exposure, frequently fail over time due to poor-quality seals that degrade after repeated use.

Accordingly, it would be desirable to provide apparatus and systems that facilitate efficient utilization of kitchen storage space. Moreover, it would also be desirable to provide apparatus and systems able to reduce food spoilage resulting from oxidative stress due to prolonged exposure to ambient air.

Apparatus and systems incorporating such advantageous features are provided herein.

### SUMMARY

This Summary is provided to introduce a selection of concepts in a simplified form that are further described below in the Detailed Description. This Summary is not intended to identify key features or essential features, nor is it intended to limit the scope of the claims included herewith.

Aspects of the present disclosure may be directed to a storage system. In an embodiment, the storage system may be comprised of one or more storage receptacles having a bottom wall, an opening, and/or at least one sidewall disposed about the bottom wall. The storage system may be further comprised of one or more lids reversibly couplable to the one or more storage receptacles, such that the one or more storage receptacles may be in at least one of an open configuration and a closed configuration, wherein the one or more lids form an airtight seal with the one or more storage receptacles while in the closed configuration. Further, the storage system may be further comprised of one or more sealing switches reversibly couplable to the one or more lids, wherein the one or more sealing switches may be configurable into at least one of a sealed state and an unsealed state.

In an embodiment, the one or more lids may be further comprised of a rim disposed about a perimeter of the one or more lids, and/or a lid top surface recessed relative to the rim. For instance, the lid top surface may be configured to receive the bottom wall of the one or more storage receptacles.

Furthermore, the one or more storage receptacles may be comprised of a first storage receptacle including a first receptacle bottom wall, a first receptacle opening, and/or a first receptacle sidewall disposed about the first receptacle bottom wall. The one or more storage receptacles may be further comprised of a second storage receptacle including a second receptacle bottom wall and/or a second receptacle sidewall disposed about the second receptacle bottom wall, wherein the second receptacle bottom wall may interface with the lid top surface and the second receptacle sidewall may interface with an interior surface of the rim while, the second receptacle is stacked upon first storage receptacle in the closed configuration.

In another embodiment, the one or more lids may be further comprised of a cavity disposed within the lid top surface, the cavity including an aperture, and a gasket disposed about the aperture, wherein the one or more sealing switches are reversibly couplable to the cavity.

Yet further, the one or more sealing switches may be further comprised of at least one of a switch top surface, a switch bottom surface, an attachment bar, and a protrusion, wherein the attachment bar and the protrusion disposed upon the switch bottom surface.

In one embodiment, the cavity may be further comprised of a first end, a second end, and/or one or more attachment clips disposed between the first end and the second end, wherein the attachment bar may be reversibly couplable to the one or more attachment clips.

Moreover, the protrusion may traverse the aperture and interface with the gasket forming an airtight seal between the protrusion and the gasket while the one or more sealing switches are in the sealed state.

In an embodiment, the aperture may allow fluid communication between the lid top surface and a lid bottom surface, while the one or more sealing switches are in the unsealed state. In another embodiment, the switch bottom surface may interface with the cavity, while the one or more sealing switches are in the unsealed state.

In a further embodiment, the one or more sealing switches may pivot about the attachment bar when coupled to the one or more attachment clips, allowing a user to toggle the one or more sealing switches between the sealed state and the unsealed state.

Accordingly, there is provided subject-matter according to any one of the following clauses:
Clause 1. A storage system comprising:
   one or more storage receptacles, each of the one or more storage receptacles including:
      a bottom wall,
      an opening, and
      at least one sidewall disposed about the bottom wall;
   one or more lids reversibly couplable to the one or more storage receptacles, such that the one or more storage receptacles may be in at least one of an open configuration and a closed configuration,
      the one or more lids forming an airtight seal with the one or more storage receptacles while in the closed configuration; and
   one or more sealing switches reversibly couplable to the one or more lids,
      the one or more sealing switches configurable into at least one of a sealed state and an unsealed state.
Clause 2. The storage system of clause 1, wherein the one or more lids are further comprised of:
   a rim disposed about a perimeter of the one or more lids, and
   a lid top surface recessed relative to the rim.
Clause 3. The storage system of clause 2, wherein the lid top surface is configured to receive the bottom wall of the one or more storage receptacles.
Clause 4. The storage system according to clause 2 or 3, wherein the one or more storage receptacles are comprised of:
   a first storage receptacle including:
      a first receptacle bottom wall,
      a first receptacle opening, and
      a first receptacle sidewall disposed about the first receptacle bottom wall; and
   a second storage receptacle including:
      a second receptacle bottom wall, and
      a second receptacle sidewall disposed about the second receptacle bottom wall; and
   wherein the second receptacle bottom wall interfaces with the lid top surface and the second receptacle sidewall interfaces with an interior surface of the rim while, the second receptacle is stacked upon first storage receptacle in the closed configuration.
Clause 5. The storage system according to any one of clauses 2, 3, or 4, wherein the one or more lids are further comprised of:
   a cavity disposed within the lid top surface, the cavity including:
      an aperture, and
      a gasket disposed about the aperture,
   wherein the one or more sealing switches are reversibly couplable to the cavity.
Clause 6. The storage system of clause 5, wherein the one or more sealing switches are further comprised of:
   a switch top surface,
   a switch bottom surface,
   an attachment bar, and
   a protrusion,
      the attachment bar and the protrusion disposed upon the switch bottom surface.
Clause 7. The storage system of clause 6, wherein the cavity further comprises:
   a first end,
   a second end, and
   one or more attachment clips disposed between the first end and the second end,
      the attachment bar reversibly couplable to the one or more attachment clips. Clause 8. The storage system according to clauses 6 or 7, wherein the protrusion traverses the aperture and interfaces with the gasket forming an airtight seal between the protrusion and the gasket while the one or more sealing switches are in the sealed state.
Clause 9. The storage system according to any one of clauses 6, 7, or 8, wherein the aperture allows fluid communication between the lid top surface and a lid bottom surface, while the one or more sealing switches are in the unsealed state.
Clause 10. The storage system of clause 9, wherein the switch bottom surface interfaces with the cavity, while the one or more sealing switches are in the unsealed state.
Clause 11. The storage system according to any one of clauses 7 to 10, wherein the one or more sealing switches pivot about the attachment bar when coupled to the one or more attachment clips, allowing a user to toggle the one or more sealing switches between the sealed state and the unsealed state.
Clause 12. A storage system comprising:
   a first storage receptacle including:
      a first receptacle bottom wall,
      a first receptacle opening, and
      a first receptacle sidewall disposed about the first receptacle bottom wall;
   a lid reversibly couplable to the first receptacle opening, such that the first storage receptacle may be in at least one of an open configuration and a closed configuration; and
   a second storage receptacle including:
      a second receptacle bottom wall, and
      a second receptacle sidewall disposed about the second receptacle bottom wall;
   the lid able to receive the second receptacle bottom wall, such that the second storage receptacle may be stacked upon the first storage receptacle, while in the closed configuration. Clause 13. The storage system of clause 12, wherein the lid is further comprised of:
   a rim disposed about a perimeter of the lid, and
   a top surface recessed relative to the rim.
Clause 14. The storage system of clause 13, wherein the second receptacle bottom wall interfaces with the top surface and the second receptacle sidewall interfaces with an interior surface of the rim while, the second receptacle is stacked upon first storage receptacle in the closed configuration.
Clause 15. A storage receptacle comprising:
   a lid reversibly couplable to the storage receptacle, such that the storage receptacle is configurable between an open configuration and a closed configuration,
      the lid including:
      a lid top surface,
      a lid bottom surface, and
      a cavity disposed within the lid top surface; and
   a sealing switch reversibly couplable to the cavity, the sealing switch configurable into at least one of a sealed state and an unsealed state.
Clause 16. The storage receptacle of clause 15, wherein the cavity is further comprised of:
   a first end,
   a second end,
   one or more attachment clips disposed between the first end and the second end,
   an aperture, and
   a gasket disposed about the aperture.
Clause 17. The storage receptacle of clause 16, wherein the sealing switch is further comprised of:
   a switch top surface,
   a switch bottom surface,
   an attachment bar, and
   a protrusion,
      the attachment bar and the protrusion disposed upon the switch bottom surface.
Clause 18. The storage receptacle of clause 17, wherein the attachment bar is reversibly couplable to the one or more attachment clips, and the sealing switch pivots about the attachment bar when coupled to the one or more attachment clips allowing a user to toggle the sealing switch between the sealed state and the unsealed state.
Clause 19. The storage receptacle of clause 18, wherein while in the sealed state, the protrusion traverses the aperture and interfaces with the gasket forming an airtight seal between the protrusion and the gasket.
Clause 20. The storage receptacle of clause 19, wherein when in the closed configuration, the lid forms an airtight seal with the opening.

### BRIEF DESCRIPTION OF THE DRAWINGS

The incorporated drawings, which are incorporated in and constitute a part of this specification exemplify the aspects of the present disclosure and, together with the description, explain and illustrate principles of this disclosure.
FIG. 1 illustrates an embodiment of apparatus and systems for storing consumable products.
FIG. 2 illustrates an embodiment of one or more storage receptacles.
FIG. 3 illustrates an embodiment of the one or more storage receptacles.
FIG. 4 illustrates an embodiment of the one or more storage receptacles.
FIG. 5 illustrates an embodiment of one or more lids in a sealed state.
FIG. 6 illustrates an embodiment of the one or more lids in an unsealed state.
FIG. 7 illustrates an embodiment of the one or more lids in the sealed state.
FIG. 8 illustrates an embodiment of a bottom surface of the one or more lids.
FIG. 9 illustrates an embodiment of the one or more lids absent one or more sealing switches.
FIG. 10 illustrates an embodiment of a cavity within the one or more lids.
FIG. 11 illustrates an embodiment of a top surface of the one or more sealing switches.
FIG. 12 illustrates an embodiment of an exploded view of a bottom surface of the one or more sealing switches.
FIG. 13 illustrates an embodiment of the apparatus and systems for storing consumable products.

### DETAILED DESCRIPTION

In the following detailed description, reference will be made to the accompanying drawing(s), in which identical functional elements are designated with like numerals. The aforementioned accompanying drawings show by way of illustration, and not by way of limitation, specific aspects, and implementations consistent with principles of this disclosure. These implementations are described in sufficient detail to enable those skilled in the art to practice the disclosure and it is to be understood that other implementations may be utilized and that structural changes and/or substitutions of various elements may be made without departing from the scope and spirit of this disclosure. The following detailed description is, therefore, not to be construed in a limited sense.

It is noted that description herein is not intended as an extensive overview, and as such, concepts may be simplified in the interests of clarity and brevity.

All documents mentioned in this application are hereby incorporated by reference in their entirety. Any process described in this application may be performed in any order and may omit any of the steps in the process. Processes may also be combined with other processes or steps of other processes.

Aspects of the present disclosure may include apparatus and systems for storing consumable products (the "storage system") 100. The storage system 100 may facilitate storage of consumable products within a kitchen and/or pantry setting. For example, the storage system 100 may limit the exposure to environmental factors, such as oxygen or moisture experienced by perishable consumable products stored within the storage system 100. As a natural consequence, the storage system 100 may prolong a shelf life of said consumable products, thereby reducing waste resulting from food spoilage.

Furthermore, the storage system 100 of the present disclosure may provide a reduced storage profile compared to those of previously existing consumable storage solutions. For instance, the storage system 100 may facilitate improved stackability, which consequently reduces the system's 100 storage footprint.

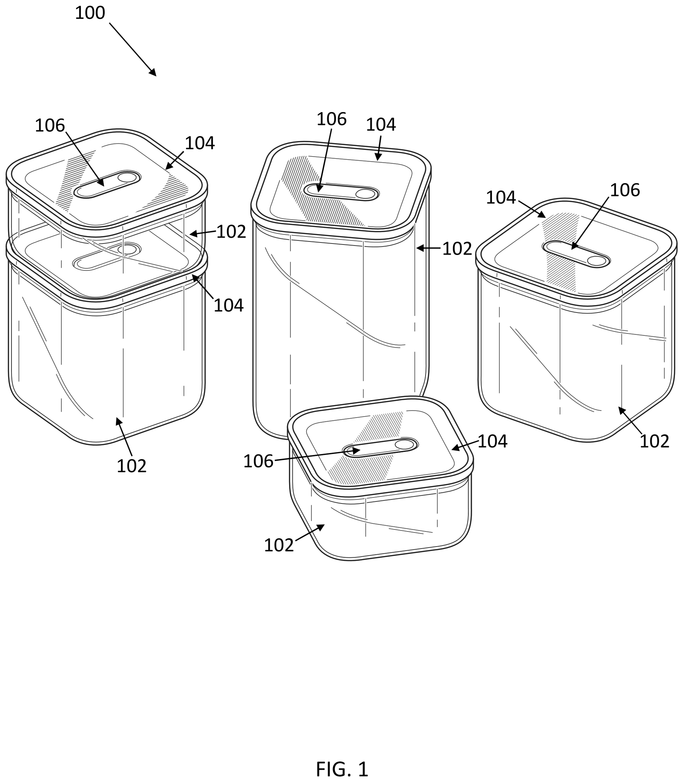

Referring to FIGS. 1-4, the storage system 100 of the present disclosure may be comprised of one or more storage receptacles (the "receptacle," "receptacles," "storage receptacle," or "storage receptacles") 102.

The receptacle 102 may be comprised of at least one sidewall 202, a bottom wall 204, and/or an opening 206. In an embodiment, the at least one sidewall 202 may be disposed about a perimeter of the bottom wall 204. In such an embodiment, a point at which the at least one sidewall 202 and bottom wall 204 intersect may exhibit an upward curvature, thus creating a rounded corner for said receptacle 102. Alternatively, the at least one sidewall 202 and bottom wall 204 may be orthogonal, such that the point at which they intersect forms a right angle.

Further, the at least one sidewall 202 may be disposed between the bottom wall 204 and the opening 206, defining a height of the receptacle 102.

In an embodiment, the bottom wall 204 and the opening 206 may be formed into corresponding geometric shapes. To illustrate, the bottom wall 204 may be formed into a square, wherein the opening 206 is formed into a corresponding square. In an exemplary embodiment, both the bottom wall 204 and the opening 206 may be formed into corresponding chamfered squares. As a nonlimiting example, the at least one sidewall 202 may be comprised of four distinct sidewalls disposed about each edge of the bottom wall 204 when formed into a square. As a further nonlimiting example, the bottom wall 204 may be formed into a circle. Thus, the at least one sidewall 202 may be a single continuous sidewall disposed about the circumference of the bottom wall 204. However, persons having ordinary skill in the art will appreciate the bottom wall 204 and/or the opening 206 may be formed into any geometric shape alternative (e.g., a triangle, an oval, a rectangle, etc.).

In another embodiment, the at least one sidewall 202 and the bottom wall 204 may define a storage compartment 214 of the one or more storage receptacles 102. For instance, said storage compartment 214 may be bound by an interior of the at least one sidewall 202 and the bottom wall 204. Meaning, the opening 206 may be in fluid communication with said storage compartment 214, such that a user may place consumable products within the storage compartment 214 of the receptacle 102 via the opening 206.

Further, the receptacle 102 may be comprised of a rigid material. As a nonlimiting example, the rigid material may include, but is not limited to, plastics such as, Acrylonitrile Butadiene Styrene (ABS), Polypropylene (PP), Polyethylene Terephthalate (PET), High-Density Polyethylene (HDPE); metals including, aluminum and/or stainless steel; glass; ceramic; and porcelain. In an exemplary embodiment, the rigid material may be borosilicate glass. As a further nonlimiting example, the rigid material may provide sufficient structure to the receptacle 102, such that a first storage receptacle may support the weight of a second storage receptacle.

As a nonlimiting example, the one or more storage receptacles 102 may be comprised of a first receptacle, a second receptacle, a third receptacle, a fourth receptacle, and/or a fifth receptacle. In such a nonlimiting example, the first, second, third, fourth, and fifth receptacles may have nonuniform heights.

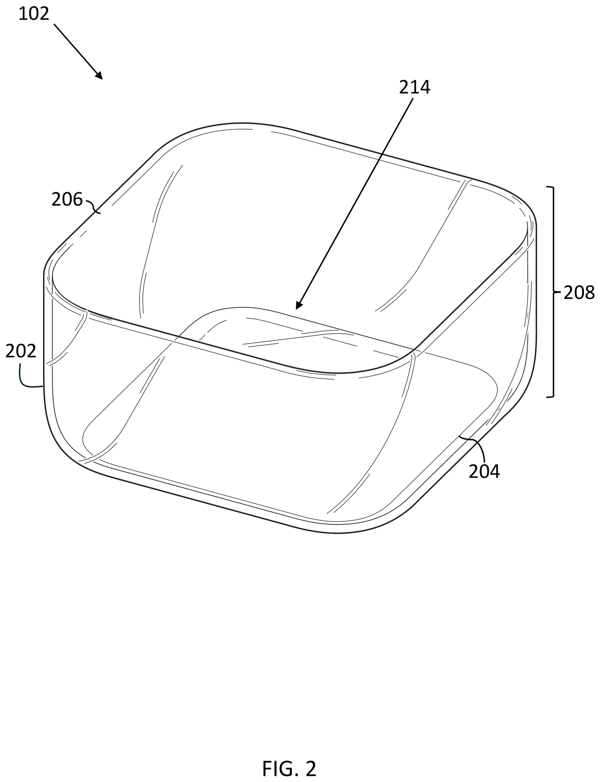

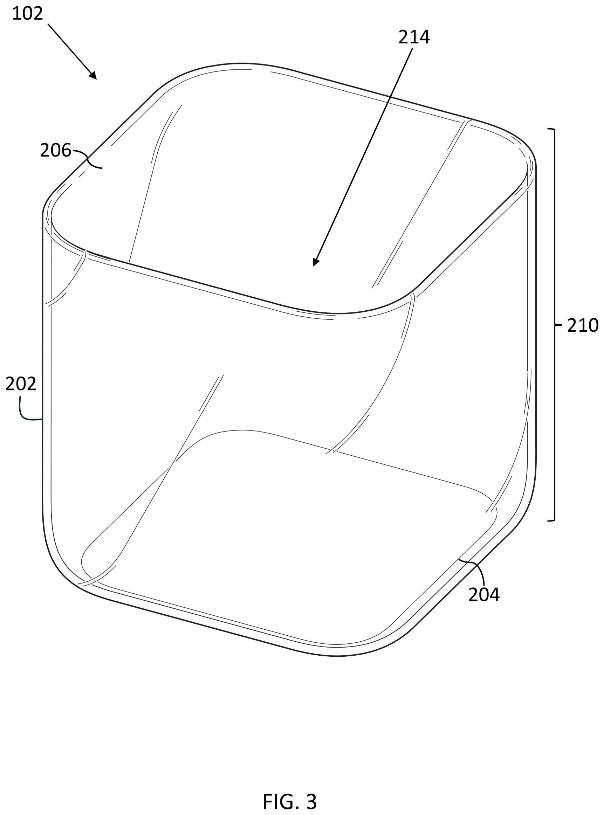

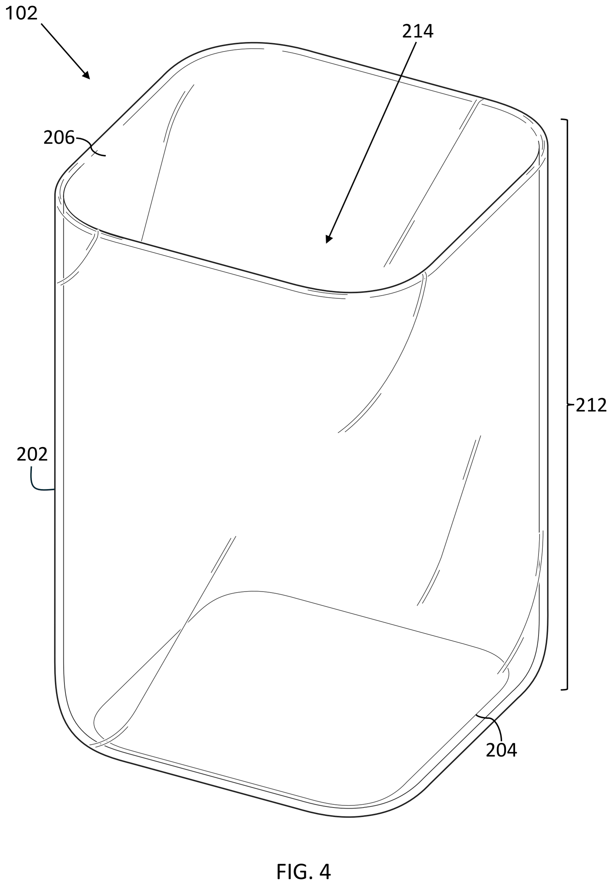

Specifically, the one or more storage receptacles 102 may fall within a distinct height category. To illustrate, the receptacle 102 of FIG. 2 may have a first height 208, the receptacle 102 of FIG. 3 may have a second height 210, and the receptacle 102 of FIG. 4 may have a third height 212. As a nonlimiting example, the first height 208 may be approximately 33% of the third height 212. Similarly, the second height 210 may be approximately 66% of the third height 212. Thus, a first receptacle having the first height 208, while stacked upon a second receptacle having the second height 210 may have a combined height equal to that of the third height 212. However, one having ordinary skill in the art will appreciate that the first, second, and third heights 208-212 may vary. For example, the first height 208 and the second height 210 may both be 50% of the third height 212. In another example, the first height 208 may be 25% of the third height 212 and the second height 210 may be 75% of the third height 212.

Additionally, the variances in height of the one or more receptacles 102 may account for a height of the lid 104 while in the closed configuration.

In a further nonlimiting example, the first receptacle, the second receptacle, and the third receptacle may have uniformly sized and shaped bottom walls 204 and/or openings 206. The uniformity in shape and size of the bottom walls 204 and/or openings 206 may enable the first receptacle, the second receptacle, and the third receptacle to be stacked upon one another. To illustrate, the first height may be equivalent to a combination of the second height and third height.

The stackability of the first, second, and third storage receptacles may reduce a storage footprint of the storage system 100. For example, the second receptacle may be stacked upon the third receptacle, and the fourth receptacle may be stacked upon the fifth receptacle. Resultingly, a horizontal storage footprint of the one or more receptacles 102 is reduced.

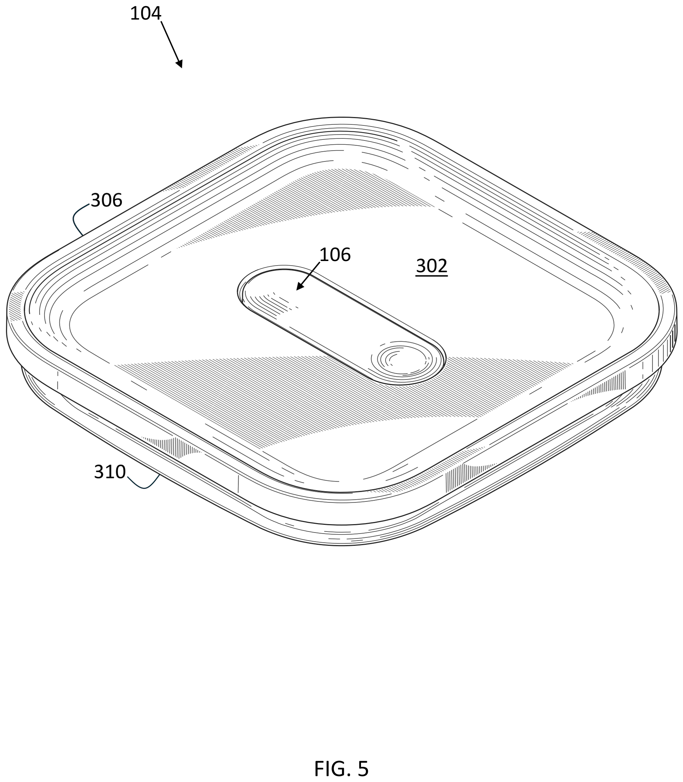

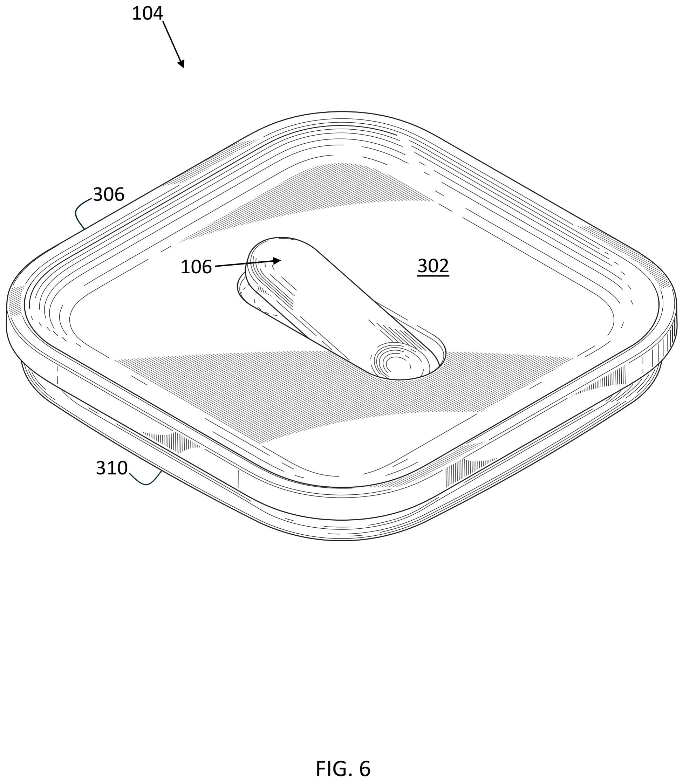

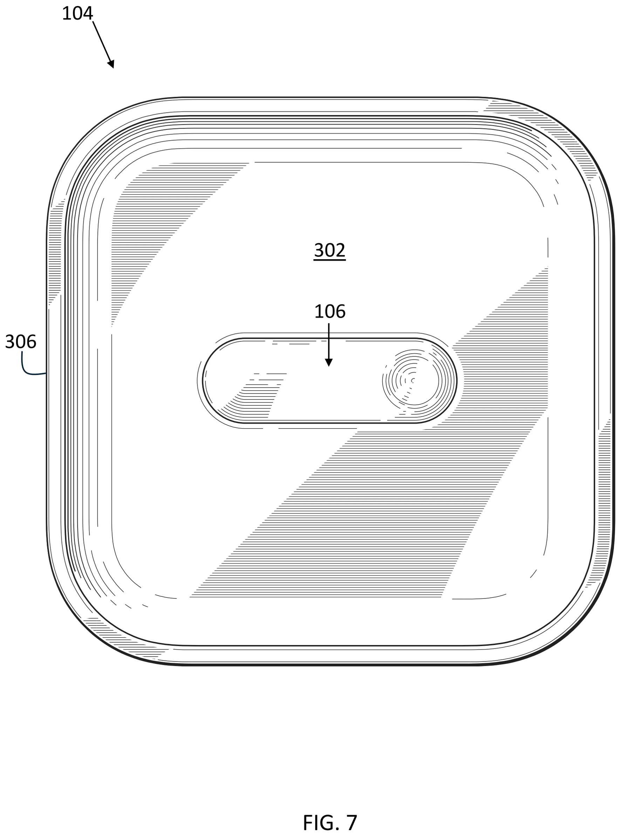

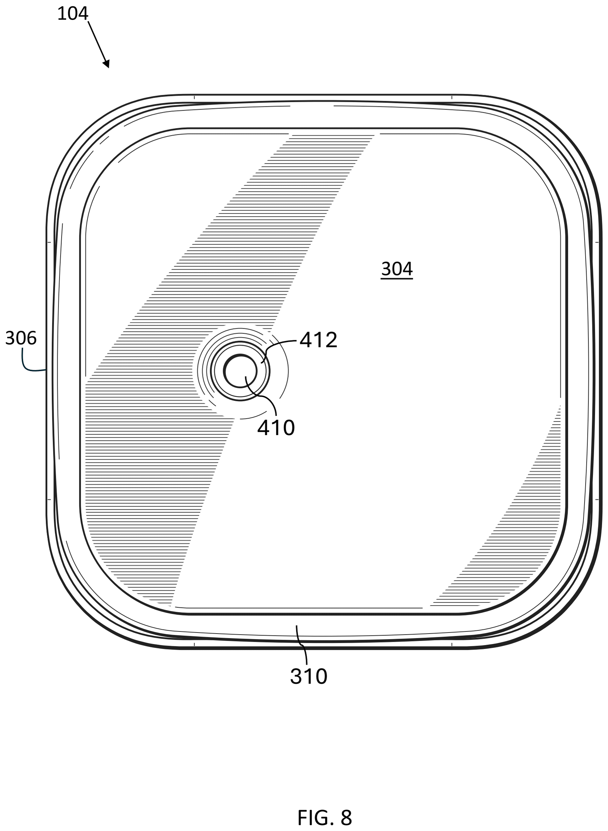

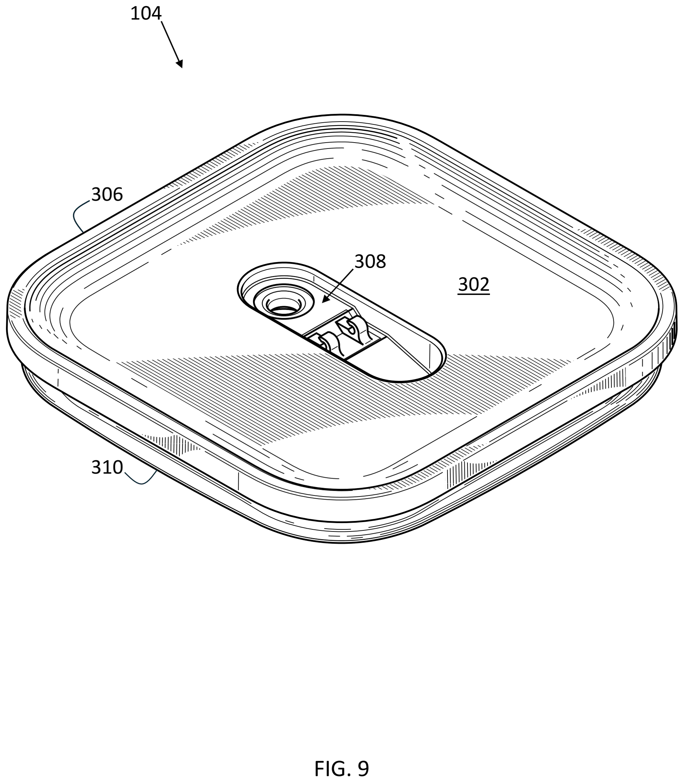

Moving to FIGS. 5-9, the storage system 100 may be further comprised of one or more lids (the "lid" or "lids") 104. In an embodiment, the one or more lids 104 may be comprised of a top surface 302, a bottom surface 304, a rim 306, and/or a cavity 308.

In an embodiment, the lid 104 may be comprised of the rigid material. In one embodiment, said lids 104 may be comprised of the same material as the receptacles 102. In another embodiment, the lids 104 and the receptacles 102 may be comprised of different materials. In an exemplary embodiment, the lids 104 may be comprised of ABS.

Furthermore, the lids 104 may reversibly couple to the receptacles 102 such that said receptacles 102 may be in one of an open configuration and a closed configuration. In an embodiment, users may toggle the receptacles 102 between the open and closed configurations via interaction with the lid 104.

For example, in the closed configuration, the lid 104 may be received by the receptacle 102 via the opening 204. To illustrate, in the closed configuration, an airtight seal may be formed between the lid 104 and the receptacle 102. That is, the storage compartment 214 may be shielded from an external environment by the lid 104. Thus, while in the closed configuration, the lid 104 may proscribe ambient air, external fluids, and the like from entering the storage compartment 214. Such an airtight seal between the lid 104 and the receptacle 102 may reduce consumable product spoilage resulting from oxidative stress due to prolonged exposure to ambient air.

In particular, the lid 104 may be further comprised of a lid gasket 110. In an embodiment, the lid gasket 310 may be received by the receptacle 102 via the opening 204. To illustrate, the lid gasket 310 may interface with the one or more sidewalls 202, while in the closed configuration, such that ambient air, external fluids, and the like are proscribed from entering the storage compartment 214. As a nonlimiting example, the lid gasket 310 may be comprised of silicone.

As a nonlimiting example, the one or more lids 104 may be formed into a geometric shape corresponding with that of the opening 206 and/or bottom wall 204. For instance, if the opening 206 is formed into a square, the one or more lids 104 may be formed into a corresponding square, such that the one or more lids 104 may form an airtight seal with the opening 206 while in the closed configuration.

As a further nonlimiting example, the one or more lids 104 may be comprised of a first lid, a second lid, a third lid wherein each of the lids are of a uniform size and shape. In such an example, the one or more lids 104 may be freely interchangeable amongst the one or more storage receptacles 102.

As previously mentioned, the lid 104 may be comprised of the top surface 302, the bottom surface 304, and the rim 306. In an embodiment, the rim 306 may be disposed about a perimeter of the top surface 302 and/or the bottom surface 304. In such an embodiment, the rim 306 may form a raised lip extending above the top surface 302. Meaning, the top surface 302 may be recessed relative to the rim 306.

Moreover, the receptacle 102 may be stacked upon the lid 104. To illustrate, the bottom wall 204 may interface with the top surface 302. In a nonlimiting example, the bottom wall 204 may reside within the recessed top surface 302 of the lid 104, while the at least one sidewall 202 interfaces with an interior surface of the rim 306. Meaning, the one or more receptacles 102 may fit within the one or more lids 104 such that there is no space between the bottom wall 204 of the receptacles 102 and the top surface 302 of the lids 104 when stacked.

The storage footprint of the storage system 100 may be reduced due to said stackability of the one or more receptacles 102 upon the one or more lids 104. To illustrate, the stackability of the one or more receptacles 102, upon the one or more lids 104, reduces a horizontal storage footprint of the one or more receptacles 102 by utilizing vertical space. Furthermore, the one or more receptacles 102 may remain easily accessible, as they are stacked while in the closed configuration.

As a nonlimiting example, a user may stack the third receptacle upon the second receptacle, while the second receptacle is in the closed configuration. Meaning, the second receptacle may store consumable products within its storage cavity, which prolongs the freshness of said products, while simultaneously allowing the third receptacle to be stacked upon it, ultimately reducing the storage footprint of the second and third receptacles.

Additionally, the lid 104 may be further comprised of a cavity 308. In an embodiment, the cavity 308 may be disposed within the top surface 302 of the lid 104.

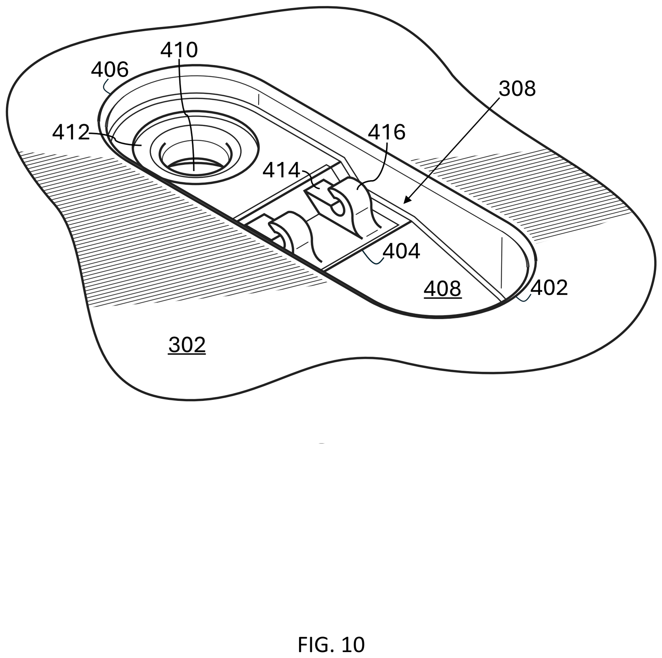

Turning to FIG. 10, the cavity 308 may be comprised of a first end 402, a transition point 404, and/or a second end 406. The transition point 404 may be disposed between the first end 402 and the second end 406. The cavity 308 may additionally be comprised of a sloped surface 408. In an embodiment, the sloped surface 408 may slope downwards from the transition point 404 to at least one of the first end 402 and the second end 406. Such a sloped surface 408 may enable one or more sealing switches 106 to be toggled between a sealed state and an unsealed state (described in more detail below).

The cavity 308 may be further comprised of an aperture 410 and a gasket 412. For instance, the aperture 410 may be disposed at either the first end 402 or the second end 406. Moreover, the aperture 410 may traverse the top surface 302 of the one or more lids 104, such that the top surface 302 and the bottom surface 304 are in fluid communication. To illustrate, the storage compartment 214 of the one or more storage receptacles 102, while in the closed configuration, may be in fluid communication with the external environment via the aperture 410.

Furthermore, the gasket 412 may be disposed within the aperture 410. To illustrate, both the aperture 410 and the gasket 412 may be formed into a circular shape. As a nonlimiting example, the gasket 412 may be an o-ring, such that the gasket 412 may reside within the aperture 410, while simultaneously enabling fluid communication between the top surface 302 and the bottom surface 304 of the one or more lids 104. In a further nonlimiting example, the gasket may be comprised of a flexible material, such as, silicone.

The cavity 308 may also include one or more attachment arms 414. In an embodiment, the arms 414 may be disposed between the first end 402 and the second end 406. Specifically, said arms 414 may be disposed between the transition point 404 and the aperture 410.

Furthermore, the one or more attachment arms 414 may enable the one or more sealing switches 106 to reversibly couple to the one or more lids 104 via one or more attachment clips 416.

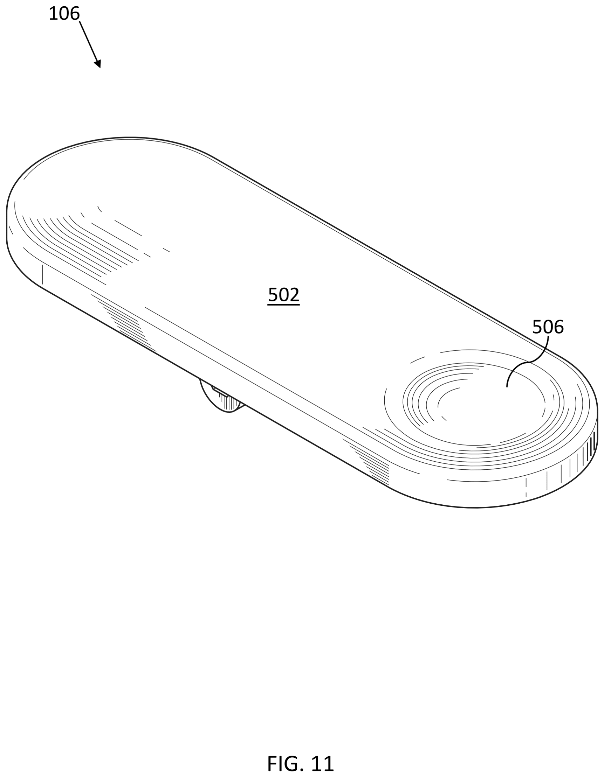

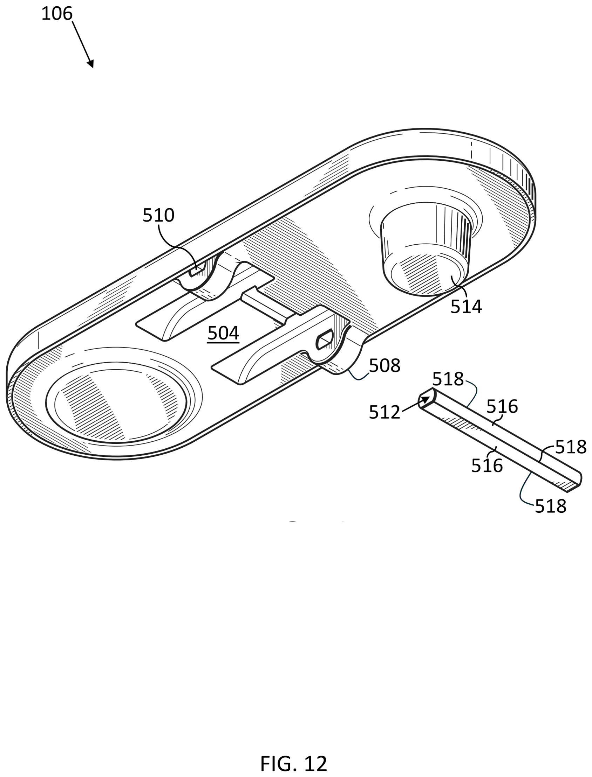

Referring to FIGS. 11-12, as previously mentioned, the storage system 100 may be further comprised of one or more sealing switches 106 (the "switch" or "switches"). In an embodiment, the one or more sealing switches 106 may be comprised of at least one of a top surface 502 and a bottom surface 504. Yet further, a dimple 506 may be disposed upon the top surface 502 of the switch 106.

The switch 106 may be further comprised of at least one of one or more bar housings 508 and an attachment bar 512. Specifically, the one or more bar housings 508 and/or the attachment bar 512 may be disposed upon the bottom surface 504 of said switch 106.

As a nonlimiting example, the attachment bar 512 may be comprised of one or more flat surfaces 516 and one or more rounded intersection points 518. Specifically, the one or more flat surfaces 516 may be comprised of four flat surfaces. Accordingly, in such an embodiment, the one or more rounded intersection points 518 are necessarily comprised of four rounded intersection points.

Further, as mentioned above, the one or more sealing switches 106 may reversibly couple with the cavity 308. In one embodiment, the attachment bar 512 may reversibly couple to the one or more attachment clips 416. As a nonlimiting example, the one or more flat surfaces 516 may facilitate bidirectional coupling with one or more attachment clips 416. That is, the one or more flat surfaces 516 allow for the switch 106 to couple to the cavity via user actuation of the switch 106 in a first direction. Conversely, user actuation of the switch 106 in a second direction opposite that of the first, enables the switch 106 to be decoupled from the one or more attachment clips 416.

In an embodiment, the one or more bar housings 508 may be further comprised of an aperture 510, wherein said aperture 510 may receive the attachment bar 512. In such an embodiment, the attachment bar 512 may be secured to the bottom surface 504 of the switch 106 via the one or more bar housings 508.

In one embodiment, the attachment bar 512 may be permanently affixed to the switch 106. For instance, the attachment bar 512 may permanently reside within the aperture 510 of the one or more bar housings 508. Alternatively, the attachment bar 512 may be reversibly coupled to the one or more bar housings 508 via the aperture 510. In such an embodiment, the reverse couplability of the attachment bar 512 may facilitate improved user cleaning of the switch 106.

Furthermore, the one or more attachment clips 416 may receive the attachment bar 512 such that the switch 106 may be reversibly coupled to the lid 104. To illustrate, the attachment bar 512 may reversibly couple to the one or more attachment clips 416, such that the cavity 308 may be exposed for improved user cleaning. Specifically, the reverse couplability of the switch 106 to the lid 104 is an improvement to existing storage solutions. To explain, existing storage solutions utilize sliding mechanisms prone to sticking, and are unable to be removed from a lid, thus are very difficult to clean. Whereas here, a user may reversibly couple the switch 106 to and from the lid 104, such that the user is able to access the cavity and bottom surface 504, enabling said user to better clean the storage system 100.

Additionally, the attachment bar 512, when coupled to the one or more attachment clips 416, may enable the switch 106 to pivot about said clips 416 via the attachment bar 512, thus enabling the user to toggle the switch 106 between the sealed and unsealed states. Specifically, the one or more rounded intersection points 518 may facilitate the pivotal movement of the switch 106 between the sealed and unsealed states.

Furthermore, the switch 106 may be further comprised of a protrusion 514. In an embodiment, the protrusion 514 may be disposed upon the bottom surface 504 of the switch 106. As a nonlimiting example, the protrusion 514 may be disposed at an end of the switch 106 opposite that of the dimple 506. Specifically, when coupled to the lid 104, the protrusion 514 may align with the aperture 410 and the dimple 506 may align with the sloped surface 408.

As previously mentioned, the switch 106 may be in either a sealed or unsealed state. In an embodiment, while in the sealed state, the protrusion 514 may be received by the aperture 410 ultimately proscribing ambient air from entering the storage compartment 214 of the one or more storage receptacles 102, while said receptacle 102 is in the closed configuration. Specifically, the gasket 412 may interface with the protrusion 514 while in the sealed state. To illustrate, the protrusion 514 may traverse the aperture and interface with the gasket 412, such that the gasket 412 and protrusion 514 work in conjunction to form an airtight seal. Additionally, the protrusion 514 may be disposed at an end of the switch 106 opposite that of the dimple 506.

In an embodiment, the user may depress the switch 106, via the dimple 506, to toggle the switch 106 from the sealed state to the unsealed state. Moreover, the user may depress the end of the switch 106 opposite that of the dimple 506, to toggle the switch 106 from the unsealed state to the sealed state.

As previously mentioned, the sloped surface 408 of the lid 104 may slope downwards from the transition point 404 to the second end 406. In an embodiment, when the user depresses the switch 106, via the dimple 506, to toggle the switch 106 from the sealed state to the unsealed state, the bottom surface 504 of the switch 106 may interface with the sloped surface 408 of the cavity 308. That is, the sloped surface's 408 grade may provide space for the switch 106 to occupy when being transitioned between the sealed and unsealed states, thus allowing the protrusion 514 to decouple from the gasket 412 and/or aperture 410.

In another embodiment, at least one of the sloped surface 408 and the switch 106 may include one or more magnets (obscured). Particularly, the bottom surface 504 of the switch 106 may include one or more magnets. To illustrate, as mentioned, while in the sealed state, the bottom surface 504 may interface with the sloped surface 408 of the cavity 308. As a nonlimiting example, the bottom surface 504 includes one or more magnets, and the sloped surface 408 includes one or more magnets, thus, while in the sealed state, the bottom surface 504 is in magnetic communication with sloped surface 408. In such a nonlimiting example, the magnetic communication between the bottom surface 504 and the sloped surface 408, may prevent the switch 106 from being inadvertently transitioned from the unsealed state to the sealed state.

While in the sealed state, the switch 106 may proscribe ambient air from entering the storage compartment 214 of the receptacles 102 while in the closed configuration. Such an ability may enable the storage system 100 to reduce spoilage of consumable products stored within the one or more storage receptacles 102.

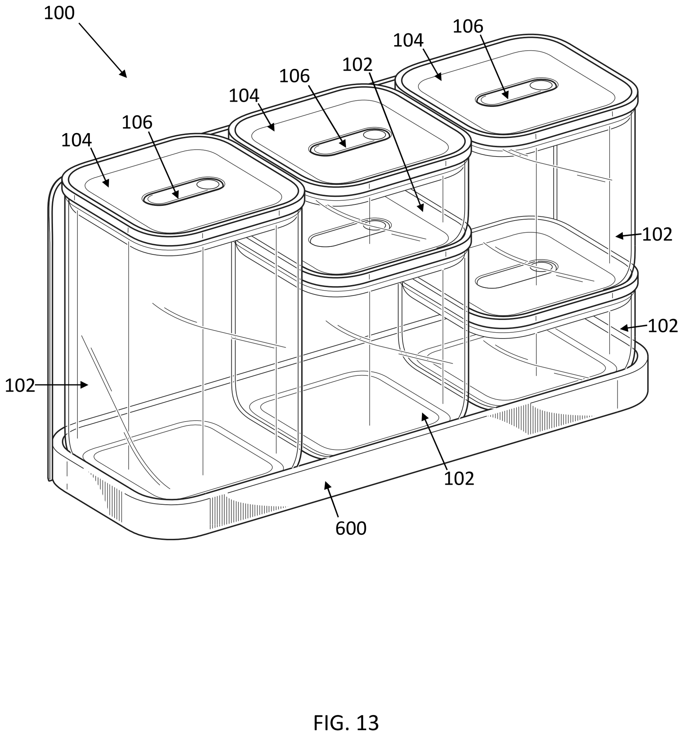

Turning to FIG. 13, the storage system 100 may be further comprised of a container organizer 600. In an embodiment, the container organizer 600 may house the one or more storage receptacles 102 while stacked.

The storage system 100 as described herein may be comprised of one or more storage receptacles 102. In an embodiment, the one or more storage receptacles 102 may include at least one of a bottom wall 204, an opening 206, and at least one sidewall 202, wherein the at least one sidewall 202 is disposed about a perimeter of the bottom wall 204.

Additionally, the storage system 100 may be further comprised of one or more lids 104 that are reversibly couplable to the one or more storage receptacles 102, such that the one or more storage receptacles 102 may be in at least one of an open configuration and a closed configuration. To illustrate, in the closed configuration, the opening 206 may receive the one or more lids 104, such that the one or more lids 104 form an airtight seal with the one or more storage receptacles 102. That is, while in the closed configuration, the one or more lids 104 may proscribe air from entering a storage compartment 214 of the one or more receptacles 102.

As a nonlimiting example, the storage compartment 214 may be defined by interior surfaces of the at least one sidewall 202 and the bottom wall 204. In the aforesaid nonlimiting example, the storage compartment 214 may be in fluid communication with an external environment, via the opening 206, when the one or more receptacles 102 are in the open configuration.

Moving on, the storage system 100 may be further comprised of one or more sealing switches 106 that are reversibly couplable to the one or more lids 104. In an embodiment, the one or more sealing switches 106 may be configurable into at least one of a sealed state and an unsealed state.

In another embodiment, the one or more lids 104 may be further comprised of a rim 306 disposed about a perimeter of the one or more lids and/or a lid top surface 302. As a nonlimiting example, the lid top surface 302 may be recessed relative to the rim 306.

Moreover, the lid top surface 302 may be configured to receive the bottom wall 204 of the one or more storage receptacles 102, thus allowing the one or more storage receptacles 102 to be stacked upon the one or more lids 104.

To illustrate, the one or more storage receptacles 102 may be comprised of a first storage receptacle having at least one of a first receptacle bottom wall, a first receptacle opening, and a first receptacle sidewall disposed about the first receptacle bottom wall. Additionally, the one or more storage receptacles 102 may be further comprised of a second storage receptacle having a second receptacle bottom wall and/or a second receptacle sidewall disposed about the second receptacle bottom wall. In the illustration above, the one or more lids 104 may couple to the opening of the first storage receptacle, thus said receptacle is in the closed configuration. While in the closed configuration, the second receptacle bottom wall may interface with the lid top surface 302 and the second receptacle sidewall may interface with an interior surface of the rim 306.

In a further embodiment, the one or more lids 104 may be further comprised of a cavity 308 disposed within the lid top surface 302, the cavity 308 including at least one of an aperture 410, and a gasket 412 disposed about the aperture 410, wherein the one or more sealing switches 106 may be reversibly couplable to the cavity 308.

In one embodiment, the one or more sealing switches 106 may be further comprised of at least one of a switch top surface 502, a switch bottom surface 504, an attachment bar 512, and a protrusion 514. As a nonlimiting example, the attachment bar 512 and the protrusion 514 may be disposed upon the switch bottom surface 504.

Additionally, the cavity 308 may be further comprised of at least one of a first end 402, a second end 406, and one or more attachment clips 416 disposed between the first end 402 and the second end 406. As a further nonlimiting example, the attachment bar 512 may be reversibly couplable to the one or more attachment clips 416.

In one embodiment, the protrusion 514 may traverse the aperture 410 and interfaces with the gasket 412 forming an airtight seal between the protrusion 514 and the gasket 412 while the one or more sealing switches 106 are in the sealed state. To illustrate, while the one or more sealing switches 106 are in the unsealed state, the aperture 410 may allow fluid communication between the lid top surface 302 and a lid bottom surface 304. Further, the switch bottom surface 504 may interface with the cavity 308, while the one or more sealing switches 106 are in the unsealed state.

In another embodiment, the one or more sealing switches 106 may pivot about the attachment bar 512 when coupled to the one or more attachment clips 416, allowing a user to toggle the one or more sealing switches 106 between the sealed state and the unsealed state.

In an embodiment, the storage system 100 may be comprised of a first storage receptacle including at least one of a first receptacle bottom wall, a first receptacle opening, and a first receptacle sidewall disposed about the first receptacle bottom wall. To illustrate, a lid 104 may be reversibly couplable to the first receptacle opening, such that the first storage receptacle may be in at least one of an open configuration and a closed configuration. Furthermore, the storage system 100 may be further comprised of a second storage receptacle including a second receptacle bottom wall, and/or a second receptacle sidewall disposed about the second receptacle bottom wall. For instance, the lid 104 may be able to receive the second receptacle bottom wall, such that the second storage receptacle may be stacked upon the first storage receptacle, while in the closed configuration.

Moreover, the lid 104 may be further comprised of a rim 306 disposed about a perimeter of the lid 104 and/or a top surface 302 recessed relative to the rim 306. As a nonlimiting example, the second receptacle bottom wall may interface with the top surface 302 and the second receptacle sidewall may interface with an interior surface of the rim 306 while, the second receptacle is stacked upon first storage receptacle in the closed configuration.

Aspects of the present disclosure may also be directed towards a storage receptacle 102 comprising a bottom wall 204, an opening 206, at least one sidewall 202 disposed about the bottom wall 204, and a storage compartment 214 defined by interior surfaces of the bottom wall 204 and the at least one sidewall 202. As a nonlimiting example, the opening 206 may be in fluid communication with the storage compartment 214.

The storage receptacle 102 may be further comprised of a lid 104 that is reversibly couplable to the opening 206, such that the storage receptacle 102 is configurable between an open configuration and a closed configuration.

In an embodiment, the lid 104 may be comprised of a lid top surface 302, a lid bottom surface 304, and/or a cavity 308 disposed within the lid top surface 302.

In yet a further embodiment, the storage receptacle 102 may be further comprised of a sealing switch 106 reversibly couplable to the cavity 308. As a further nonlimiting example, sealing switch 106 may be configurable into at least one of a sealed state and an unsealed state.

Furthermore, the cavity 308 may be further comprised of at least one of a first end 402, a second end 406, one or more attachment clips 416 disposed between the first end and the second end, an aperture 410, and a gasket 412 disposed about the aperture 410.

Moreover, the sealing switch 106 may be further comprised of a switch top surface 502, a switch bottom surface 504, an attachment bar 512, and/or a protrusion 514. In one embodiment, the attachment bar 512 and the protrusion 514 may be disposed upon the switch bottom surface 504.

As a nonlimiting example, the attachment bar 512 may be reversibly couplable to the one or more attachment clips 416, such that the sealing switch 106 is able to pivot about the attachment bar 512 when coupled to the one or more attachment clips 416, ultimately allowing a user to toggle the sealing switch 106 between the sealed state and the unsealed state.

Moreover, while in the sealed state, the protrusion 514 may traverse the aperture 410 and interface with the gasket 412, necessarily forming an airtight seal between the protrusion 514 and the gasket 412. Further, when in the closed configuration, the lid 104 may form an airtight seal with the opening 206 of the storage receptacle 102.

Finally, other implementations of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

Various elements, which are described herein in the context of one or more embodiments, may be provided separately or in any suitable subcombination. Further, the processes described herein are not limited to the specific embodiments described. For example, the processes described herein are not limited to the specific processing order described herein and, rather, process blocks may be re-ordered, combined, removed, or performed in parallel or in serial, as necessary, to achieve the results set forth herein.

It will be further understood that various changes in the details, materials, and arrangements of the parts that have been described and illustrated herein may be made by those skilled in the art without departing from the scope of the following claims.

All references, patents and patent applications and publications that are cited or referred to in this application are incorporated in their entirety herein by reference. Finally, other implementations of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

## Claims

1. A storage system comprising:
one or more storage receptacles (102), each of the one or more storage receptacles (102) including:
a bottom wall (204),
an opening (206), and
at least one sidewall (202) disposed about the bottom wall (204);
one or more lids (104) reversibly couplable to the one or more storage receptacles (102), such that the one or more storage receptacles (102) may be in at least one of an open configuration and a closed configuration,
the one or more lids (104) forming an airtight seal with the one or more storage receptacles (102) while in the closed configuration; and
one or more sealing switches (106) reversibly couplable to the one or more lids (104),
the one or more sealing switches (106) configurable into at least one of a sealed state and an unsealed state.

2. The storage system of claim 1, wherein the one or more lids (104) are further comprised of:
a rim (306) disposed about a perimeter of the one or more lids (104), and
a lid top surface (302) recessed relative to the rim (306).

3. The storage system of claim 2, wherein the lid top surface (302) is configured to receive the bottom wall (204) of the one or more storage receptacles (102).

4. The storage system according to claim 2 or 3, wherein the one or more storage receptacles (102) are comprised of:
a first storage receptacle including:
a first receptacle bottom wall,
a first receptacle opening, and
a first receptacle sidewall disposed about the first receptacle bottom wall; and
a second storage receptacle including:
a second receptacle bottom wall, and
a second receptacle sidewall disposed about the second receptacle bottom wall; and
wherein the second receptacle bottom wall interfaces with the lid top surface (302) and the second receptacle sidewall interfaces with an interior surface of the rim (306) while, the second receptacle is stacked upon first storage receptacle in the closed configuration.

5. The storage system according to any one of claims 2, 3, or 4, wherein the one or more lids (104) are further comprised of:
a cavity (308) disposed within the lid top surface (302), the cavity (308) including:
an aperture (410), and
a gasket (412) disposed about the aperture,
wherein the one or more sealing switches (106) are reversibly couplable to the cavity (308).

6. The storage system of claim 5, wherein the one or more sealing switches (106) are further comprised of:
a switch top surface (502),
a switch bottom surface (504),
an attachment bar (512), and
a protrusion (514),
the attachment bar (512) and the protrusion (514) disposed upon the switch bottom surface (504).

7. The storage system of claim 6, wherein the cavity (308) further comprises:
a first end (402),
a second end (406), and
one or more attachment clips (416) disposed between the first end (402) and the second end (406),
the attachment bar (512) reversibly couplable to the one or more attachment clips (416).

8. The storage system according to claims 6 or 7, wherein the protrusion (514) traverses the aperture (410) and interfaces with the gasket (412) forming an airtight seal between the protrusion (514) and the gasket (412) while the one or more sealing switches (106) are in the sealed state.

9. The storage system according to any one of claims 6, 7, or 8, wherein the aperture (410) allows fluid communication between the lid top surface (302) and a lid bottom surface (304), while the one or more sealing switches (106) are in the unsealed state.

10. The storage system of claim 9, wherein the switch bottom surface (504) interfaces with the cavity (308), while the one or more sealing switches (106) are in the unsealed state.

11. The storage system according to any one of claims 7 to 10, wherein the one or more sealing switches (106) pivot about the attachment bar (512) when coupled to the one or more attachment clips (416), allowing a user to toggle the one or more sealing switches (106) between the sealed state and the unsealed state.
